# FASCICULE DE BREVET EUROPEEN

(11) **EP 0 819 961 B1**
(45) Date de publication et mention de la délivrance du brevet: **01.10.2008**
(21) Numéro de dépôt: 97401676.8
(22) Date de dépôt: 11.07.1997
(51) Int. Cl.: G02B 6/38

(54) **Dispositif à compensation de jeu de mise en réference d'une terminaison de conducteurs par rapport à une autre pièce**
Vorrichtung zum Spielausgleich eines Adernendes relativ zu einem anderen Stück
Play-compensating device for conductor ends relative to another piece

(30) Priorité: 17.07.1996 FR 9608928
(43) Date de publication de la demande: 21.01.1998
(73) Titulaire: Amphenol Socapex, 74311 Thyez Cedex (FR)
(72) Inventeur: Pouyez, Philippe, 95100 Argenteuil (FR); Kayoun, Pierre, 92100 Boulogne (FR)
(74) Mandataire: Dronne, Guy

(56) Documents cités:
- CH-A- 676 513
- US-A- 4 854 664
- R. L. STOKLEY: "Fiber-optic cable termination device" IBM TECHNICAL DISCLOSURE BULLETIN, vol. 20, no. 3, août 1977, NEW-YORK, page 893 XP002027990
- PATENT ABSTRACTS OF JAPAN vol. 007, no. 073 (P-186), 25 mars 1983 & JP 58 004110 A (KIYOUSERA KK), 11 janvier 1983,

## Description

La présente invention concerne un dispositif à compensation de jeu de mise en référence de la terminaison d'un conducteur électrique ou optique par rapport à une autre pièce et de préférence une autre pièce de même nature.

Dans le cas de connecteurs pour conducteur optique, il est nécessaire pour avoir une bonne qualité de transmission du signal que la ou les terminaisons du ou des conducteurs optiques d'un des éléments du connecteur soit parfaitement positionnés ou mis en référence par rapport aux terminaisons des conducteurs optiques correspondants de l'autre élément du connecteur optique. En effet, tout désalignement entraîne une perturbation de la transmission du signal optique.

Dans le cas de certains connecteurs électriques et notamment dans le cas de connecteurs servant à accoupler des conducteurs électriques utilisés dans le domaine des hyper fréquences ou des radiofréquences, il est également nécessaire d'avoir une grande précision dans le positionnement des terminaisons des conducteurs électriques des deux éléments du connecteur.

Dans le présent texte, par terminaison de conducteur optique, il faut entendre soit l'extrémité nue d'une fibre optique, soit une lentille optique, soit une lentille rendue solidaire d'une fibre optique, par exemple, par une ferrule, soit encore un émetteur ou un récepteur ou encore un émetteur récepteur optique. Dans tous les cas, cette terminaison possède au moins une portion de surface cylindrique.

On voit qu'il existe donc un réel besoin, notamment pour la fabrication de connecteurs optiques ou de certains connecteurs électriques, de disposer d'un système qui permet une mise en référence très précise de la terminaison ou des terminaisons du conducteur ou des conducteurs montés sur l'élément de connecteur.

Le document "IBM Technical Disclosure Bulletin, Vol. 20, No. 3, Août 1977 décrit une terminaison de câble optique dans laquelle les génératrices de fibres sont appliquées contre des génératrices d'un orifice grâce à des moyens poussoirs élastiques, la terminaison étant dépourvue de moyens de mise en référence par rapport à un connecteur externe.

Le document CH 676 513 A5 décrit un connecteur dans lequel les génératrices de terminaisons de conducteurs sont appliquées contre des génératrices d'un orifice grâce à des moyens poussoirs dépourvus de pièce annulaire déformable.

Le document US 4,854,664 décrit un connecteur dans lequel les génératrices de terminaisons de conducteurs sont appliquées contre des génératrices d'un orifice grâce à des moyens poussoirs dépourvus de pièce annulaire déformable.

Qu'ils s'agissent de terminaison de conducteurs optiques ou de conducteurs électriques, le problème consiste à aligner deux à deux des éléments qui ont la forme de cylindre ou qui comportent une portion de surface cylindrique. Cette mise en référence doit permettre de garantir la précision nécessaire de positionnement tout en restant démontable et en assurant une bonne reproductibilité au remontage ou au réalignement. Il faut en outre, de préférence, garantir une bonne tenue aux environnements vibratoires et aux changements de température.

Pour atteindre ce but, selon l'invention, le dispositif de mise en référence de la terminaison d'un conducteur par rapport à une autre pièce, ladite terminaison présentant au moins une portion de surface cylindrique présentant un axe XX' et un diamètre D, ledit dispositif se caractérisant en ce qu'il comprend:
une embase munie de moyens de mise en référence par rapport à l'autre pièce et percée d'au moins un orifice dont la paroi comprend au moins une portion de surface cylindrique de diamètre D'>D d'axe YY' et de longueur L; et
des moyens poussoir pour exercer une force selon un axe ZZ' orthogonal à YY' et qui coupe l'axe YY' de l'orifice dans sa portion cylindrique, lesdits moyens poussoir agissant sur la terminaison du conducteur de telle manière qu'une génératrice de la terminaison soit appliquée contre une génératrice AA' de l'orifice définie par l'axe ZZ', ladite génératrice AA' occupant une position déterminée par rapport aux moyens de mise en référence de l'embase,
les moyens poussoir agissant sur une longueur suffisante de la terminaison du conducteur pour que la génératrice de la terminaison soit appliquée sur la génératrice AA' de l'orifice sur une longueur suffisante de telle manière que l'axe XX' de ladite terminaison soit effectivement parallèle à l'axe YY' de l'orifice.

On comprend que, selon l'invention, la mise en référence de la terminaison du conducteur par rapport à l'autre pièce est réalisée en deux étapes. D'une part, il y a, par construction de l'embase, mise en référence des moyens de référence par rapport à l'axe de l'orifice ménagé dans l'embase et, d'autre part, il y a mise en référence de l'axe de la terminaison optique par rapport à une génératrice parfaitement définie de l'orifice, cette génératrice étant définie par la direction de la force appliquée par les moyens formant poussoir.

On comprend également que, grâce au fait que l'action des moyens poussoir s'exercent sur une longueur suffisante, on a mise en référence, non pas seulement de l'extrémité de la terminaison, c'est-à-dire de sa face terminale, mais mise en référence effective de l'axe de la terminaison du conducteur.

On voit enfin que, du fait de l'utilisation des moyens poussoir, la démontabilité du conducteur par rapport à l'embase est réalisée de façon simple.

Selon une variante de mise en oeuvre, le dispositif de mise en référence peut s'appliquer à la mise en référence par rapport à une autre pièce de n terminaisons de conducteurs montées dans l'embase. Selon ce mode de mise en oeuvre, le dispositif se caractérise en ce qu'il comprend n orifices comportant chacun au moins une portion cylindrique d'axes Y₁Y₁' parallèles entre eux et de diamètre Di supérieur aux diamètres Dⁱ des terminaisons et en ce que les moyens poussoirs comprennent un unique organe de commande et n organes de poussée commandés par ledit organe de commande, chaque organe de poussée étant associé à un orifice et exerçant sur la terminaison correspondante une force selon une direction ZⁱZ'ⁱ.

On comprend que les moyens poussoir qui sont commandés à l'aide d'un seul organe permettent d'appliquer une génératrice de chaque terminaison contre une génératrice parfaitement déterminée à l'avance de chacun des orifices cylindriques assurant ainsi la mise en référence de chacune des terminaisons par rapport aux moyens de mise en référence de l'embase vis-à-vis de l'autre pièce.

D'autres caractéristiques et avantages de l'invention apparaîtront mieux à la lecture de la description qui suit de plusieurs modes de réalisation de l'invention donnés à titre d'exemple non limitatif. La description se réfère aux figures annexées sur lesquelles :
- les figure 1 et 2 sont des vues respectivement en coupe transversale et longitudinale d'un dispositif de mise en référence de terminaison de conducteurs illustrant le principe de l'invention;
- la figure 3 est une vue en coupe longitudinale d'un premier mode de réalisation d'un dispositif de mise en référence d'une seule terminaison de conducteurs;
- la figure 4 est une vue en coupe partielle agrandie du dispositif de la figure 3 selon la ligne 4-4;
- la figure 5 montre l'accouplement entre deux dispositifs de mise en référence selon l'invention;
- la figure 6a est un schéma illustrant la mise en référence de plusieurs terminaisons;

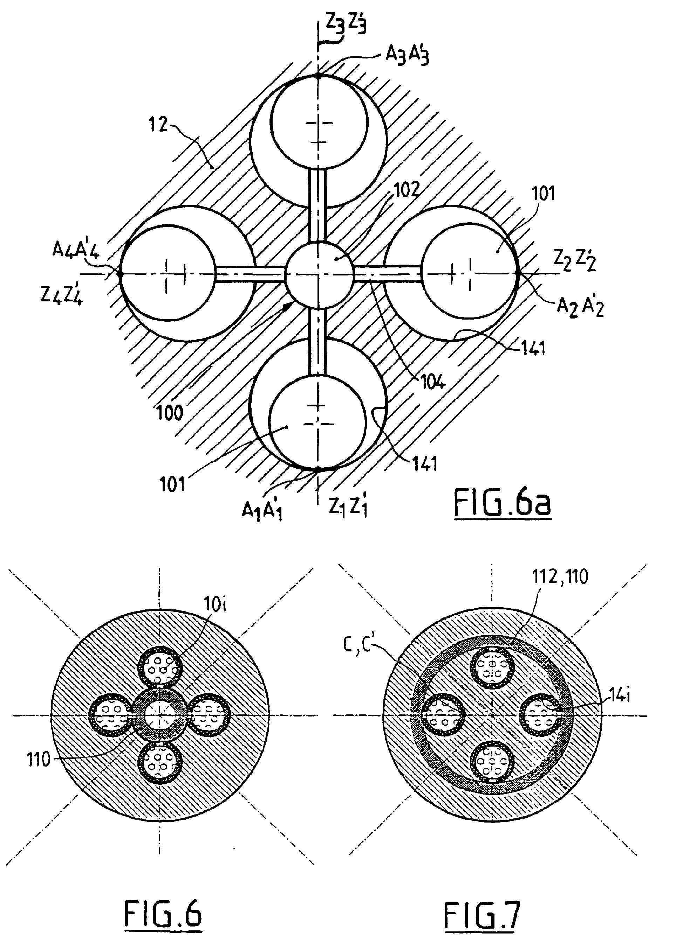

- la figure 6 est une vue en coupe transversale montrant un mode de réalisation du dispositif permettant la mise en référence de quatre terminaisons de conducteurs selon un premier mode de mise en oeuvre;
- la figure 7 est une vue similaire à celle de la figure 6 montrant une variante de réalisation du dispositif;

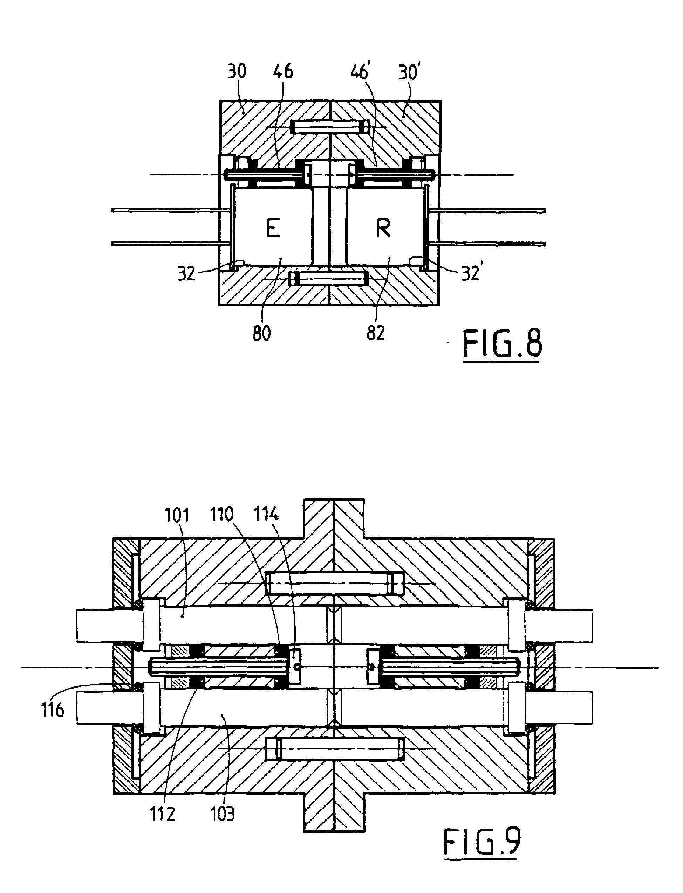

- la figure 8 montre un exemple d'utilisation du dispositif selon l'invention pour la mise en référence d'un émetteur optique avec un récepteur optique;
- la figure 9 est une vue en coupe longitudinale d'un dispositif de mise en référence de plusieurs terminaisons; et

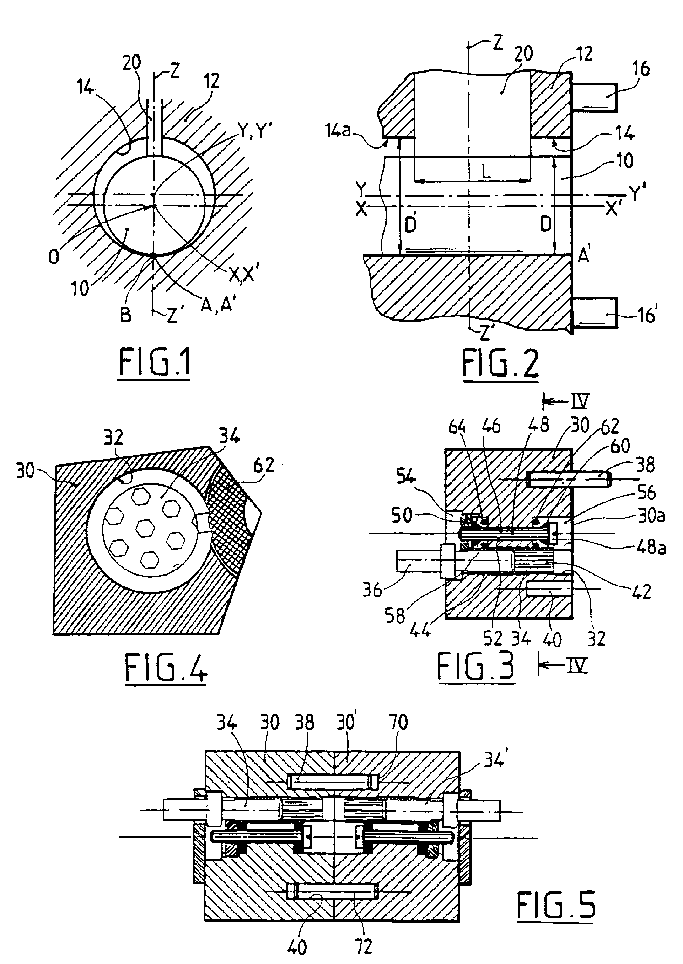

En se référant tout d'abord aux figures 1 et 2, on va décrire le principe du dispositif de mise en référence selon l'invention. La terminaison à mettre en référence a une forme cylindrique 10 de diamètre D et d'axe XX' ou du moins sa périphérie comporte une portion de surface cylindrique d'axe XX' et de diamètre D. La mise en référence de cette terminaison par rapport à une autre pièce non représentée sur les figures se fait à l'aide d'une pièce mécanique ou embase 12 qui est percée d'un orifice cylindrique 14 de diamètre D' supérieur au diamètre D de la terminaison. Cet orifice 14 présente un axe YY'. L'axe YY' est positionné avec précision par rapport à des éléments de référence de position 16, 16' solidaires de l'embase. Par ailleurs, le diamètre de l'orifice 14 est défini également avec une grande précision. En d'autres termes, n'importe quelle génératrice de la paroi interne 14a de l'orifice 14 est définie avec précision par rapport aux éléments de mise en référence 16, 16'. Pour réaliser la mise en référence de la terminaison 10 par rapport aux éléments de mise en référence 16 et 16', on introduit la terminaison 10 dans l'orifice 14 et, à l'aide de moyens poussoir 20, on applique une force sur la face externe cylindrique de la terminaison 10. Si la direction d'application de la force se fait selon l'axe ZZ' qui est orthogonal à l'axe YY' de l'orifice et qui coupe cet axe, le contact entre la paroi externe de la terminaison 10 et la paroi interne 14a de l'orifice 14 se fait sensiblement selon une génératrice de la terminaison et selon une génératrice AA' de la paroi de l'orifice. La génératrice AA' est entièrement déterminée par la direction ZZ' selon laquelle le poussoir 20 agit sur la terminaison. Cette génératrice est celle qui passe par le point B d'intersection de l'axe ZZ' avec la paroi de l'orifice 14. Il en résulte que l'axe XX' de la terminaison 10 est mis en référence avec précision par rapport aux organes de mise en référence 16 et 16'.

Pour assurer que c'est effectivement l'axe XX' qui est mis en référence et non uniquement le centre O de la face d'extrémité 10a de la terminaison qui est mise en référence, le poussoir 20 agit sur la périphérie de la terminaison sur une longueur L suffisante pour que le contact se fasse effectivement selon une portion de génératrice.

On comprend de plus que, comme le contact entre la terminaison 10 et la paroi cylindrique de l'orifice 14 se fait selon une seule génératrice, le positionnement obtenu est extrêmement précis.

Dans le cas où la périphérie de la terminaison ne comporte qu'une portion de surface cylindrique d'axe XX' et où l'orifice 14 ne comporte également qu'une portion de surface cylindrique d'axe YY', il faut bien sur que la direction ZZ' d'application de la force par le poussoir soit telle que le contact entre la périphérie de la terminaison et la paroi interne de l'orifice se produise dans la zone où les deux surfaces cylindriques sont présentes de telle manière que ce contact soit réalisé effectivement selon une génératrice AA' de l'orifice 14.

On voit également que le dispositif selon l'invention permet de s'affranchir des effets des éventuelles dilatations thermiques différentielles entre l'orifice et la terminaison.

En effet, le jeu initial est suffisant pour autoriser ces dilatations et le poussoir exerce la force sur la terminaison selon la direction ZZ' quelles que soient les variations de diamètre de la terminaison et de l'orifice.

Après avoir exposé le principe de l'invention, on va décrire, à titre d'exemple, ci-après différents modes de mise en oeuvre du dispositif de mise en référence faisant application du principe décrit en détails précédemment.

De préférence, les moyens poussoir consistent en une bague annulaire déformable dont on provoque par écrasement une augmentation du diamètre externe à l'aide d'un système mécanique. Le diamètre externe de la bague annulaire agit sur la périphérie de la terminaison du conducteur selon la direction voulue et joue donc le rôle du poussoir 20 décrit précédemment. Il faut ajouter que, sur les figures 1 et 2, on a augmenté volontairement très sensiblement la différence entre le diamètre de la terminaison D et le diamètre D' de l'orifice 14. En réalité, ces deux diamètres sont proches l'un de l'autre et, en conséquence, le déplacement à appliquer à la terminaison du conducteur est d'une très faible amplitude.

Les figures 3 et 4 illustrent un premier mode de réalisation du dispositif de mise en référence dans le cas où une seule terminaison est à mettre en référence.

Sur la figure 3, on a représenté l'embase 30 munie de son orifice cylindrique 32 dans lequel est engagée la terminaison 34 du conducteur optique 36. Dans la face antérieure 30a, sont ménagés les moyens de mise en référence avec l'autre pièce. Ces moyens de mise en référence sont par exemple un ergot de positionnement 38 et un logement de positionnement 40 destiné à recevoir l'ergot de l'autre pièce. Dans le cas particulier décrit, la terminaison 34 est constitué par le câble optique 36 à l'extrémité duquel est fixée une lentille optique 42 ou tout autre système optique convenable. L'ensemble est rendu solidaire par une ferrule métallique 44. La pièce cylindrique qu'il faut mettre en référence est donc dans ce cas la ferrule 44 dont le diamètre est égal à D. Le dispositif poussoir qui porte la référence générale 46 est constitué par une vis 48 qui coopère avec un écrou 50. Cette vis 48 est engagée librement dans un alésage axial 52 de l'embase 30. La tête de la vis 48a et l'écrou 50 sont disposés dans des logements 54 et 56 qui communiquent avec l'orifice cylindrique 32. La tête 48a de la vis et l'écrou 50 sont munis d'une rondelle conique 58 et 60. Enfin, de part et d'autre de l'alésage 52, sont montées autour du fût de la vis des bagues toriques 62 et 64 réalisées en un matériau élastomérique déformable. On comprend que, en vissant la vis 48 dans l'écrou 50, les joints toriques 62 et 64, sous l'effet du rapprochement des rondelles coniques, voient leur diamètre externe s'expanser. Chaque joint torique est enserré entre l'écrou ou la tête de la vis et une butée mécanique fixe constituée par le fond des logements 54 et 56. Chaque joint torique est enserré entre l'écrou ou la tête de la vis et une butée mécanique fixe constituée par le fond des logements 54 et 56. Il en résulte qu'une partie de la périphérie des joints toriques vient en appui sur la paroi 44 de la terminaison 34 provoquant le placage de cette terminaison sur la génératrice de l'orifice 32 ainsi que cela a déjà été expliqué. Il est intéressant de souligner que ce moyen qui constitue un équivalent du poussoir 20 est d'un actionnement facile. Pour mettre en place la terminaison 34, la vis est dévissée à son maximum et il suffit ensuite de visser la vis pour provoquer la placage de la terminaison.

Sur la figure 5, on a représenté deux embases 30 et 30' identiques qui permettent la mise en référence de la terminaison 34 dans l'embase 30 et 34' dans l'embase 30'. Sur cette figure, on a fait apparaître le logement 70 de l'embase 30' qui reçoit l'ergot 38 et l'ergot 72 qui pénètre dans le logement 40 de l'embase 30. On comprend qu'ainsi, on obtient un positionnement rigoureux en regard l'un de l'autre des axes des terminaisons 34 et 34'.

Il faut ajouter que le déplacement de la terminaison est réalisé par les deux joints toriques 62 et 64. La distance entre ces deux joints est suffisante pour assurer que l'axe de la terminaison est bien mise en référence, comme on l'a expliqué précédemment.

La figure 8 illustre l'utilisation du dispositif selon l'invention pour la mise en référence d'un émetteur optique 80 et d'un récepteur optique 82. les embases 30 et 30' comportent un orifice cylindrique 32' et 32 de diamètre suffisant pour permettre l'insertion de l'émetteur et du récepteur qui ont, bien entendu, une forme générale cylindrique. Chaque embase est équipée d'un système de commande de déplacement 46 et 46' qui est identique à celui qui a été décrit en liaison avec les figures 3 et 4.

Dans la description précédente, on a illustré la mise en référence d'une seule terminaison. On comprend cependant que le dispositif de mise en référence selon l'invention peut être utilisé pour la mise en référence de plusieurs terminaisons optiques ou électriques. Ce sera le cas par exemple lorsqu'on veut mettre en référence quatre fibres optiques d'un premier élément de connecteur avec quatre autres fibres optiques du deuxième élément de connecteur ou plus généralement au moins deux terminaisons.

Sur la figure 6a, on a représenté schématiquement les quatre terminaisons 10₁, 10₂, etc. qui sont mises en place dans les orifices cylindriques 14₁, 14₂, etc. réalisés dans l'embase 12. Les orifices cylindriques 14 ont tous des axes YY' parallèles entre eux et perpendiculaires au plan de la figure. Le dispositif comprend également des moyens formant poussoir 100 qui, à l'aide d'un seul organe de commande 102, déplace des poussoirs tels que 104 venant en appui sur les différentes terminaisons. Les poussoirs exercent des forces selon les directions Zⁱ, Z'ⁱ comme le montre la figure 6a et la mise en référence se fait donc selon des génératrices Ai, A'i des orifices définis par les directions Zⁱ, Z'ⁱ. On a donc ainsi simultanément mis en références des différentes terminaisons 10ⁱ.

La figure 6 montre plus en détails la réalisation d'un dispositif pour la mise en référence de quatre terminaisons 10ⁱ. Le dispositif de commande est analogue à celui qui a été décrit en liaison avec les figures 3 et 4, c'est-à-dire qu'il est constitué par deux joints toriques 110 et 112, comme le montre la figure 9 coopérant avec un système vis-écrou 114, 116. Les logements dans lesquels se trouve la tête de la vis et l'écrou ainsi que les joints toriques 110 et 112 communiquent avec les quatre orifices cylindriques dans lesquels sont engagées les terminaisons. Par vissage de la vis 114, on obtient ainsi la dilatation ou augmentation de diamètre externe des joints, ce qui provoque le placage simultané des quatre terminaisons 10ⁱ.

La figure 7 illustre une variante de réalisation dans laquelle le joint torique 112 n'occupe pas une position axiale mais entoure l'ensemble des orifices cylindriques 14ⁱ. On comprend que l'on obtient exactement le même résultat que dans le cas de la figure 6 mais la mise en référence se fait par application sur les génératrices C, C' des orifices cylindriques 14ⁱ.

Dans les modes de mise en oeuvre décrits précdemment, la pièce avec laquelle la ou les terminaisons doivent être mises en référence comprend une embase percée d'orifices qui est similaire ou identique à l'embase du dispositif. On a ainsi l'équivalent d'un connecteur avec son élément mâle et son élément femelle.

Il va de soi que le système de joint torique déformable commandé par un ensemble vis-écrou présente une grande efficacité pour la mise en référence des terminaisons dans les orifices cylindriques et que, de plus, elles sont d'un actionnement aisé. On comprend cependant qu'on ne sortirait pas de l'invention si les moyens utilisés pour plaquer les terminaisons selon une direction précise sur la paroi interne des orifices avait une structure mécanique différente.

## Revendications

1. Connecteur pour connecter la terminaison d'au moins un conducteur à un autre connecteur, ladite terminaison présentant au moins une portion de surface cylindrique présentant un axe XX' et un diamètre D, ledit connecteur comprenant :
- une embase présentant une face de connexion avec l'autre connecteur, ladite face étant munie de moyens de mise en référence spatiale par rapport à l'autre connecteur, ladite embase étant percée d'au moins un orifice dont la paroi comprend au moins une portion de surface cylindrique de diamètre D'>D, d'axe YY' et de longueur L, ladite terminaison étant engagée dans ledit orifice ;
- des moyens poussoir entièrement montés dans ladite embase ; et
- des moyens de commande des moyens poussoir également entièrement montés dans ladite embase pour que les moyens poussoir exercent une force selon un axe ZZ' orthogonal à YY' et qui coupe l'axe YY' de l'orifice dans sa portion cylindrique, lesdits moyens poussoir agissant sur la terminaison du conducteur de telle manière qu'une génératrice de la terminaison soit appliquée contre une génératrice AA' de l'orifice définie par l'axe ZZ', ladite génératrice AA' occupant une position déterminée par rapport aux moyens de mise en référence de l'embase,
les moyens poussoir agissant sur une longueur suffisante de la terminaison du conducteur pour que la génératrice de la terminaison soit appliquée sur la génératrice AA' de l'orifice sur une longueur suffisante de telle manière que l'axe XX' de ladite terminaison soit effectivement parallèle à l'axe YY' de l'orifice ;
lesdits moyens poussoir comprenant une première pièce annulaire déformable par compression de telle manière que son diamètre externe augmente sous l'effet de la compression, une partie de la périphérie de la pièce annulaire étant apte à pénétrer dans ledit orifice pour exercer sur ladite terminaison une force selon la direction ZZ', des moyens pour appliquer ladite compression à ladite pièce annulaire et une deuxième pièce annulaire déformable décalée par rapport à la première pièce selon la direction de l'axe YY' dudit orifice.

2. Connecteur selon la revendication 1 **caractérisé en ce qu'**il comprend n terminaisons de conducteurs, **en ce que** ladite embase comprend n orifices comportant chacun au moins une portion cylindrique d'axes yⁱy^{i'} parallèles entre eux et de diamètres D^{i'} supérieurs aux diamètres Dⁱ des terminaisons et **en ce que** les moyens poussoirs comprennent un unique organe de commande et n organes de poussée commandés par ledit organe de commande, chaque organe de poussée étant associé à un orifice et exerçant sur la terminaison correspondante une force selon une direction ZⁱZ'ⁱ.

3. Connecteur selon la revendication 2, **caractérisé en ce que** les moyens poussoir comprennent deux pièces annulaires déformables par compression de telle manière que leurs diamètres externes augmentent sous l'effet de la compression, lesdites pièces annulaires étant aptes à pénétrer dans lesdits n orifices pour exercer sur lesdites terminaisons des forces selon les directions ZⁱZ'ⁱ.

4. Connecteur selon l'une quelconque des revendications 1 et 3, **caractérisé en ce que** les moyens pour appliquer ladite compression comprennent un ensemble vis-écrou dirigé selon la direction de l'axe YY' de l'orifice, chaque pièce annulaire entourant le corps de ladite vis et étant interposée entre l'écrou ou la tête de la vis et une butée mécanique fixe.

5. Connecteur selon la revendication 4, **caractérisé en ce que** ledit écrou et la tête de la vis sont munis d'une rondelle conique tournée vers ladite pièce annulaire pour favoriser l'expansion radiale de ladite pièce.

## Claims

1. A registering device for putting the termination of a conductor into register relative to another element, said termination having at least one cylindrical surface portion about an axis XX' and having a diameter D, said device being characterize in that it comprise:
- a base fitted with means for putting it into spatial register relative to the other clement and pierced by at least one orifices whose wall includes at least one cylindrical surface portion of diameter D' >D and of axis YY', and of length L, said termination being engaged in the said orifice:
- pusher means entirety fixes in the said base; and
- control means and pusher means equably entirety fixed in said base so that the pusher means for exerting a force along an axis ZZ' orthogonal to YY' and intersecting the axis YY' of the orifice in its cylindrical portion, said pusher means acting on the conductor germination in such a manner that a generator line of the termination if pressed against a generator line AA' of the orifice as defined by the axis ZZ', said generator line AA' occupying a determined position relative to the registering means of the base;
the pusher means acting over a portion of the conductor termination that is of sufficient length to ensure that the generator line of the germination is pressed against the generator line AA' of the orifice over a length that is sufficient to ensure that the axis XX' of said termination is indeed parallel to the axis YY' of the orifice;
the said pusher means comprise a first annular part deformable in compression in such a manner that its outside diameter increases under the effect of the compression, part of the external part of the annular part being suitable for penetrating into said orifice to exert forces on said termination in the direction ZZ' , means for applying the said compression to the said annular part and a second deformable annular part offset elative to the first part in the directions of the axis YY' of said orifice.

2. A device according tea claim 1: **characterized in that** it includes n conductor termination, **in that** said base comprises n orifice each including at least one cylindrical portion of axis YiYi', said axes being mutually parallel, and said orifices being of diameters Dⁱ' greater than the diameters Dⁱ of the terminations, and **in that** the pusher means comprise a single control member and n pusher members controller buy said control member, each pusher member being associated with an orifice and exerting a force on the corresponding termination in a direction ZⁱZ'ⁱ.

3. A device according to claim 2, **characterized in that** the pusher means comprise two annular parts that are deformable by compression so that their external diameters increase under the effect of compression, said annular parts being suitable for penetrating in said n orifices to exert on said termination a force in the direction ZⁱZ'ⁱ.

4. A devise according to any one of claims 1 and 3, **characterized in that** the means for applying said compression, comprise a screw and nut assemble expending along the direction of the orifice axis YY', each annular part surrounding the body of said screw and being interposed between the not or the head of the screw and a stationary mechanical abutment.

5. A device according to claim 4, characterize in that said nut and the head of the screw are provides with respecter conical washers directed towards the angular part to favour radial expansion of said part.

## Patentansprüche

1. Verbinder, um das Ende wenigstens eines Leiters mit einem anderen Verbinder zu verbinden, wobei das Ende wenigstens einen zylindrischen Flächenabschnitt mit einer Achse XX' und einem Durchmesser D aufweist, wobei der Verbinder folgendes umfaßt:
- einen Sockel, der eine Fläche zum Verbinden mit dem anderen Verbinder aufweist, wobei die Flache mit Mitteln zum räumlichen Inbezugsetzen zu dem anderen Verbinder versehen ist, wobei in dem Sockel wenigstens eine Öffnung ausgebildet ist, deren Wand wenigstens einen zylinderischen Flächenabschnitt mit dem Durchmesser D'>D, der Achse YY' und der Länge L aufweist, wobei das Ende in die Öffnung eingesteckt ist;
- Druckmittel, die vollständig in dem Sockel angebracht sind; sowie
- Mittel zum Betätigen der Druckmittel, die ebenfalls vollständig in dem Sockel angebracht sind, damit die Druckmittel eine Kraft entlang einer Achse ZZ' ausüben, die zu YY' orthogonal verläuft und die die Achse YY' der Öffnung in ihrem zylindrischen Abschnitt schneidet, wobei die Druckmittel derart auf das Ende des Leiters wirkten, das eine Mantellinie des Endes gegen eine durch die Achse ZZ' definierte Mantellinie AA' der Öffnung gedrückt wird, wobei die Mantellinie AA' eine bestimmte Position gegenüber den Inbezugsetzungsmitteln des Sockels einnimmt,
wobei die Druckmittel auf eine ausreichende Länge des Endes des Leiters wirken, damit die Mantellinie des Endes gegen die Mantellinie AA' der Öffnung über eine ausreichende Länge derart gedrückt wird, daß die Achse XX' des Endes tatsächlich parallel zur Achse YY' der Öffnung verläuft;
wobei die Druckmittel folgendes umfassen, nämlich ein erstes ringförmiges Teil, das derart druckverformbar ist, daß sein Außendurchmesser unter der Wirkung des Druckes zunimmt, wobei ein Teil des Umfangs des ringförmigen Teils geeignet ist, in die Öffnung einzudringen, um auf das Ende eine Kraft entlang der Richtung ZZ' auszuüben, Mittel zum Anlegen des Druckes an das ringförmige Teil sowie ein zweites ringförmiges, verformbares Teil, das gegenüber dem ersten Teil entlang der Richtung der Achse YY' der Öffnung versetzt ist.

2. Verbinder nach Anspruch 1, **dadurch gekennzeichnet**, das er n Leiterenden umfaßt, das der Sockel n Öffnungen aufweiset, die jeweils wenigstens einen zylindrischen Abschnitt mit den parallel zueinander verlaufenden Achsen YiYi' und mit den Durchmessern D^{i'} , die größer als die Durchmesser Dⁱ der Enden sind, aufweisen, und das die Druckmittel ein einziges Betätigungsorgan sowie n durch das Betätigungsorgan betätigte Druckorgane umfassen, wobei jedes Druckorgan einer Öffnung zugeordnet ist und auf das entsprechende Ende eine Kraft entlang einer Richtung ZⁱZ'ⁱ ausübt.

3. Verbinder nach Anspruch 2, **dadurch gekennzeichnet, daß** die Druckmittel zwei aringförmige Teile umfassen, die derart druckverformbar sind, daß ihre Außendurchmesser unter der Wirkung des Druckes zunahmen, wobei die ringförmigen Teile geeignet sind, in die n Öffnungen einzudringen, um auf die Enden Kräfte entlang den Richtungen ZⁱZ'ⁱ auszuüben.

4. Verbinder nach einem der Absprüche 1 und 3, **dadurch gekennzeichnet, daß** die Mittel zum Anlegen des Drucks eine Schraube-Mutter-Einheit umfassen, die entlang der Richtung der Achse YY' der Öffnung ausgerichtet ist, wobei jedes ringförmige Teil den Körper der Schraube umschließt und zwischen der Mutter oder dem Kopf der Schraube und einem festen mechanischen Anschlag angeordnet ist.

5. Verbinder nach Anspruch 4, **dadurch gekennzeichnet, daß** die Mutter und der Kopf der Schraube mit einer dem ringförmigen Teil zugewandten konischen Scheibe versehen sind, zum die radiale Ausdehnung des Teils zu begünstigen.
